# EUROPÄISCHE PATENTSCHRIFT

(11) **EP 0 985 100 B1**
(45) Veröffentlichungstag und Bekanntmachung des Hinweises auf die Patenterteilung: **22.10.2003**
(21) Anmeldenummer: 98925616.9
(22) Anmeldetag: 19.05.1998
(51) Int. Cl.: F16B 13/14

(54) **VERANKERUNGSPATRONE AUS KUNSTSTOFF**
PLASTIC ANCHORING CARTRIDGE
CHEVILLE D'ANCRAGE EN MATIERE PLASTIQUE

(30) Priorität: 03.06.1997 DE 19723136; 24.03.1998 DE 19812818
(43) Veröffentlichungstag der Anmeldung: 15.03.2000
(73) Patentinhaber: fischerwerke Artur Fischer GmbH & Co. KG, 72178 Waldachtal (DE)
(72) Erfinder: GRÜN, Jürgen, D-79268 Bötzingen (DE); WEBER, Christian, D-79312 Emmendingen (DE); MOSER, Roland, D-79312 Emmendingen (DE); SCHÄTZLE, Joachim, D-79341 Kenzingen (DE)
(86) Internationale Anmeldenummer: EP9802932
(87) Internationale Veröffentlichungsnummer: WO98055772

(56) Entgegenhaltungen:
- EP-A- 0 389 412
- WO-A-91/17342
- GB-A- 1 293 620

## Beschreibung

Die Erfindung betrifft eine Verankerungspatrone aus Kunststoff für eine aushärtende, aus Harz und Härter bestehende Mehrkomponentenmasse gemäß der Gattung des Anspruchs 1.

Aus der DE-OS 38 06 598 ist eine Verankerungspatrone für eine aushärtende Mehrkomponentenmasse bekannt, deren Innen- und Außenpatrone aus Glas bestehen und die mit Hilfe von Quarzsand unterschiedlicher Korngröße koaxial fixiert sind. Als nachteilig hat sich gezeigt, daß beim Setzen insbesondere von Verankerungspatronen mit kleinerem Durchmesser eine große Schlagkraft benötigt wird. Verankerungspatronen aus Glas haben ferner den Nachteil, daß sie vor dem ungewollten Heraustreten der Komponenten vor der Montage nicht genügend geschützt sind. So kann es vorkommen, daß durch in den Glaspatronen auftretenden Materialspannungen im Bereich der Abschweißung Haarrisse entstehen. Dies kann dazu führen, daß während des Transports Masse austritt und die gesamte Verpackung der Patronen unbrauchbar macht. Außerdem besteht durch die Glaspatronen eine erhöhte Verletzungsgefahr für den Handwerker.

Es sind daher schon Versuche unternommen worden, die Harz- und Härterkomponente in einer Patrone aus Kunststoff unterzubringen. Eine derartige Patrone ist in der DE OS 28 43 038 beschrieben. Diese Patrone ist rohrförmig ausgebildet und über das Einführende des Ankers gestülpt. Auf diese Weise ist die Patrone fest mit dem Anker verbunden. Zur Trennung der Komponenten ist der Innenraum der Patrone durch Längs- und Querstege geteilt.

Bei der bekannten Patrone treten jedoch Probleme hinsichtlich des Zertrümmerns bzw. des Zermahlens des Kunststoffes auf. Beim Zertrümmern der Patrone im Bohrloch durch den schlagdrehenden Anker entstehen Kunststoffstükke, deren Größe unterschiedlich sind. Größere im Ringspalt befindliche Bruchstücke stören den Misch- und Aushärtvorgang und verhindern den Verbund an ihren Außenflächen. Dadurch entstehen unterschiedliche Festigkeiten im Mörtelkern, die die Tragfähigkeit der Verankerung erheblich beeinträchtigen. Ferner ist das bekannte System aufwendig in der Befüllung der Patrone und kompliziert in der Handhabung.

Der Erfindung liegt daher die Aufgabe zu Grunde, eine Verankerungspatrone zu schaffen, die wirtschaftlich im Spritzgußverfahren aus Kunststoff herstellbar ist, und die ein Zertrümmern der Patronen in kleine, gleichmäßige Bruchstücke und ein Vermengen der Komponenten zu einer homogenen, nach dem Aushärten eine hohe Tragfähigkeit aufweisenden Verbundmasse ermöglicht. Die Lösung dieser Aufgabe wird durch die im Anspruch 1 angegebenen Merkmale erreicht.

Durch die in gleichmäßigen Abständen zueinander angeordneten Querschnittsschwächungen der Wandung der Außenpatrone entstehen Sollbruchstellen, die zunächst ein Zertrümmern der Patrone in gleichmäßigen Bruchstücken ermöglicht. Danach werden diese Bruchstücke zermahlen und zusammen mit der Harz- und Härterkomponente vermengt. Es entsteht eine homogene Verbundmasse, die sowohl eine gute Haftung zur Bohrlochwandung als auch eine hohe Tragfähigkeit nach dem Aushärten aufweist. Aufgrund der Sollbruchstellen ist außerdem nur eine geringe Schlagkraft zum Zertrümmern der Patrone erforderlich.

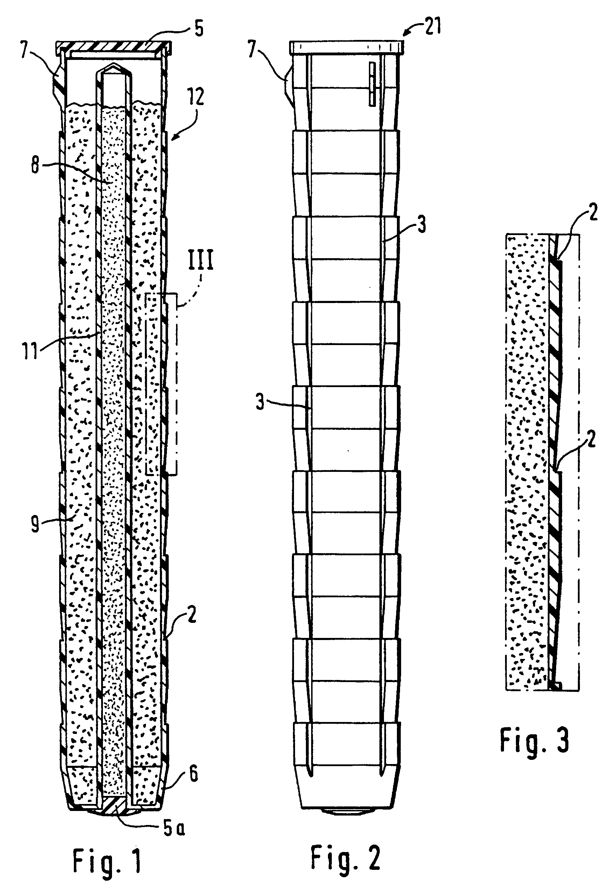

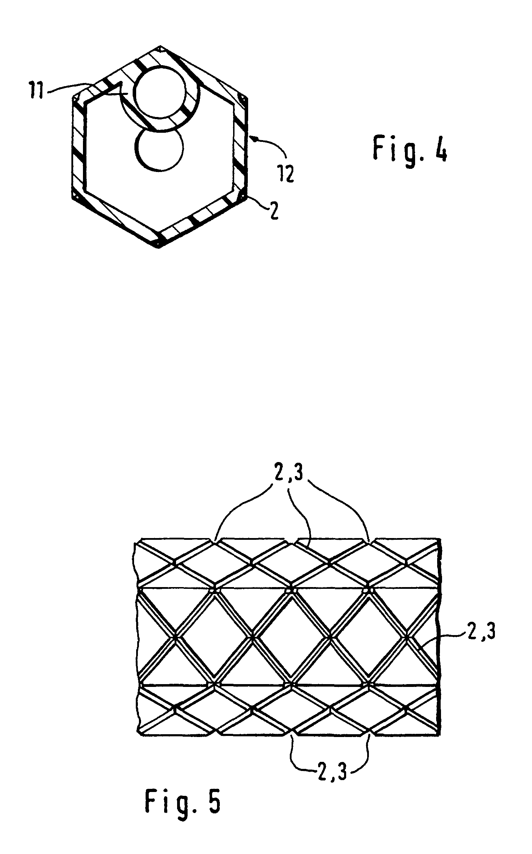

Die erfindungsgemäße Patrone besteht aus einer Außenpatrone 12 und einer Innenpatrone 11, wie die Figuren 1 und 4 darstellen.

Die Außenpatrone 12 ist mit Querschnittsschwächungen 2, 3, wie die Figuren 5, 2 und 1 darstellen, versehen.

Die Querschnittsschwächungen können durch umlaufende und im Profil sägezahnförmige Einschnürungen sowie durch in axialer und diagonaler Richtung verlaufende Kerben gebildet sein. Dadurch entstehen scharfkantige Sollbruchstellen, die einerseits leicht aufbrechen und anderseits Schneiden und Kanten bilden, die einen zusätzlichen Zermahleffekt bewirken.

Um das Einführen der Patrone in das Bohrloch zu erleichtern, ist das vordere Ende der Patrone mit einer Einführschräge versehen.

Für die Überkopfmontage ist es zweckmäßig, die Verankerungspatrone im Bereich des hinteren Endes mit vorsprungartigen Klemmelementen zu versehen. Mit diesen Klemmelementen wird die Verankerungspatrone im Bohrloch fixiert und gegen Herausfallen gesichert.

Als zweckmäßig hat sich gezeigt, daß beim Einsatz von kleineren Patronen, beispielsweise Patronen der Größe M8, es vorteilhaft ist, die Außenpatrone als Vieleckgeometrie auszubilden. Dadurch wird sichergestellt, daß die Patrone beim Setzen optimal in kleine Bruchstücke zerfällt, die leicht mit den Harz- und Härterkomponenten sowie den Füllstoffen vermischt werden, so daß eine homogene Masse entsteht.

In der Zeichnung ist ein Ausführungsbeispiel der Erfindung dargestellt.
Es zeigen:
- Figur 1: die erfindungsgemäße Patrone im Schnitt
- Figur 2: die Patrone nach Figur 1 in Sicht
- Figur 3: die vergrößerte Darstellung der Patronenwandung nach Figur 1
- Figur 4: die Patrone nach Figur 1 mit einer Vieleckgeometrie
- Figur 5: die vergrößerte Darstellung der Patronenwandung

Die Patrone nach Figur 4 zeigt eine rohrförmige Innenpatrone 11, die von einer vieleckigen Außenpatrone 12 umgeben ist, wobei in einem Rohr die Mörtelkomponente und im zweiten Rohr die Harzkomponente mit Füllstoffen untergebracht ist.

Die Innen- und Außenpatrone ist mit Harz- und Härterkomponente 8, 9 befüllt, wobei die Befüllungsanordnung frei gewählt werden kann. Die Wandung der Außenpatrone 12 ist mit Querschnittsschwächungen 2, 3, die in gleichmäßigen Abständen zueinander angeordnet sind, versehen. Die Querschnittsschwächungen 2, 3 werden durch die in axialer Richtung verlaufenden Kerben 3 oder durch die umlaufende im Profil sägezahnförmigen Einschnürungen 2 gebildet. Die beiden Stirnseiten der Patrone sind mit Kunststoffkappen 5, 5a verschlossen. Ferner ist das vordere Ende der Patrone mit einer Einführschräge 6 versehen. Im Bereich des hinteren Endes 21 der Patrone sind vorsprungartige Klemmelemente 7, wie die Figur 2 darstellt, angebracht.

Die vergrößerte Darstellung der Patronenwandung nach Figur 3 zeigt die sägezahnförmige Einschnürung.

## Patentansprüche

1. Verankerungspatrone für eine aushärtende, aus Harz und Härter bestehende Mehrkomponentenmasse, mit einer die eine Komponente enthaltenden rohrförmigen Innenpatrone, die von einer mit der anderen Komponente befüllten, rohrförmigen Außenpatrone umgeben ist, **dadurch gekennzeichnet, daß** die Wandung der Außenpatrone (12) in gleichmäßigen Abständen zueinander angeordnete Querschnittsschwächungen (2, 3) als Sollbruchstellen aufweist, und daß die Patrone aus Kunststoff besteht.

2. Verankerungspatrone nach Anspruch 1, **dadurch gekennzeichnet, daß** die Querschnittsschwächungen durch umlaufende, im Profil sägezahnförmige Einschnürungen (2) gebildet sind.

3. Verankerungspatrone nach Anspruch 1, **dadurch gekennzeichnet, daß** die Querschnittsschwächungen durch in axialer und diagonaler Richtung verlaufende Kerben (3) gebildet sind.

4. Verankerungspatrone nach Anspruch 1, **dadurch gekennzeichnet, daß** die Patrone an beiden Stirnseiten mit Kunststoffkappen (5, 5a) verschlossen ist.

5. Verankerungspatrone nach Anspruch 1, **dadurch gekennzeichnet, daß** die Außenpatrone eine Vieleckgeometrie aufweist.

6. Verankerungspatrone nach Anspruch 1, **dadurch gekennzeichnet, daß** das vordere Ende der Patrone mit einer Einführschräge (6) versehen ist.

7. Verankerungspatrone nach Anspruch 1, **dadurch gekennzeichnet, daß** im Bereich des hinteren Endes der Patrone vorsprungartige Klemmelemente (7) angebracht sind.

## Claims

1. Anchoring cartridge for a hardening multi-component composition consisting of resin and hardener, having a tubular inner cartridge containing one component and surrounded by a tubular outer cartridge filled with the other component, **characterized in that** the wall of the outer cartridge (12) has cross-sectional weak points (2, 3) arranged at regular intervals with respect to one another as intended breaking sites, and **in that** the cartridge consists of plastics material.

2. Anchoring cartridge according to claim 1, **characterized in that** the cross-sectional weak points are formed by circumferential narrowings (2) of saw-tooth profile.

3. Anchoring cartridge according to claim 1, **characterized in that** the cross-sectional weak points are formed by grooves (3) running axially and diagonally.

4. Anchoring cartridge according to claim 1, **characterized in that** the cartridge is closed at both ends by plastics caps (5, 5a).

5. Anchoring cartridge according to claim 1, **characterized in that** the outer cartridge has a polygonal geometry.

6. Anchoring cartridge according to claim 1, **characterized in that** the leading end of the cartridge is provided with an insertion taper (6).

7. Anchoring cartridge according to claim 1, **characterized in that** projection-like gripping elements (7) are disposed in the region of the rear end of the cartridge.

## Revendications

1. Cheville d'ancrage pour une masse durcissante à plusieurs composants, composée de résine et de durcisseurs, comportant une cheville intérieure de forme tubulaire contenant l'un des composants, qui est entourée d'une cheville extérieure de forme tubulaire remplie de l'autre des composants, **caractérisée en ce que** la paroi de la cheville extérieure (12) présente des affaiblissements transversaux (2, 3) disposés à intervalles réguliers les uns des autres en tant qu'endroits de rupture nominale, et **en ce que** la cheville est composée de matière plastique.

2. Cheville d'ancrage selon la revendication 1, **caractérisée en ce que** les affaiblissements transversaux sont formés par des strictions (2) circulaires à profil en dents de scie.

3. Cheville d'ancrage selon la revendication 1, **caractérisée en ce que** les affaiblissements transversaux sont formés par des entailles (3) s'étendant dans le sens axial et diagonal.

4. Cheville d'ancrage selon la revendication 1, **caractérisée en ce que** la cheville est fermée au niveau des deux extrémités frontales avec des capuchons en matière plastique (5, 5a).

5. Cheville d'ancrage selon la revendication 1, **caractérisée en ce que** la cheville extérieure présente une géométrie polygonale.

6. Cheville d'ancrage selon la revendication 1, **caractérisée en ce que** l'extrémité avant de la cheville est dotée d'un biseau d'insertion (6).

7. Cheville d'ancrage selon la revendication 1, **caractérisée en ce que** des éléments de serrage (7) en forme de saillie sont disposés dans la région de l'extrémité arrière de la cheville.
